# DEMANDE DE BREVET EUROPEEN

(11) **EP 3 818 957 A1**
(43) Date de publication de la demande: **12.05.2021**
(21) Numéro de dépôt: 19207269.2
(22) Date de dépôt: 05.11.2019
(51) Int. Cl.: A61C 7/08, A61C 13/00, B26D 7/00

(54) **DISPOSITIF DE COUPE, POUR LA SÉPARATION D'UNE GOUTTIÈRE OCCLUSALE D'UN MODÈLE D'ARCADE DENTAIRE**

(71) Demandeur: Accante, 62360 Saint-Léonard (FR)
(72) Inventeur: DAMAY, François, 62930 WIMEREUX (FR); WATRE, Stéphane, 62200 BOULOGNE sur Mer (FR); DAMAY, Marie, 62930 WIMEREUX (FR)
(74) Mandataire: Ipside

(57) **Abrégé**

La présente invention concerne un dispositif de coupe, pour la séparation d'une gouttière occlusale d'un modèle d'arcade dentaire sur laquelle la gouttière occlusale a été thermoformée, le dispositif de coupe comportant selon l'invention un boîtier avec une base comportant des moyens de réception, aptes à maintenir, sur un plateau, solidaire de la base, le film de la gouttière thermoformée, et des moyens de déplacement du plateau dans un plan sensiblement horizontal, des moyens de coupe reliés, via un bras, à une paroi du boîtier et coopérant avec les moyens de déplacement du plateau pour permettre la découpe de la gouttière occlusale sur son modèle.

## Description

L'invention se situe dans le domaine technique de la fabrication en laboratoire d'une gouttière occlusale, également connue sous le nom de plaque occlusale et plus particulièrement de type « mou » obtenue par thermoformage d'un film sur une modèle d'arcade dentaire.

Cette application n'est toutefois pas limitative et le dispositif pourra également être utilisé pour la réalisation de gouttière dentaire utilisant la technique de thermoformage et nécessitant une étape de coupe pour la séparation de la gouttière de son modèle.

### Technique antérieure

Classiquement la phase de coupe pour la séparation de la gouttière occlusale est réalisée manuellement au cabinet dentaire par le dentiste ou un assistant dentaire qui effectue la coupe à partir d'un outil de coupe tel qu'un cutter ou encore un outil de coupe motorisé équipé d'un film à tronçonner. Cette opération manuelle est délicate à réaliser et demande une grande dextérité. Dans la pratique, cette opération est longue et dangereuse pour l'opérateur, et à la fois imprécise et source de défaut pour la gouttière occlusale.

### Résumé de l'invention

La présente invention concerne un dispositif de coupe, pour la séparation d'une gouttière occlusale d'un modèle d'arcade dentaire sur laquelle la gouttière occlusale a été thermoformée, et tel que, selon l'invention, le dispositif de coupe comprend un boîtier avec : une base comportant des moyens de réception, aptes à maintenir, sur un plateau, solidaire de la base, le film de la gouttière thermoformée, et des moyens de déplacement du plateau dans un plan sensiblement horizontal, des moyens de coupe reliés, via un bras, à une paroi du boîtier et coopérant avec les moyens de déplacement du plateau pour permettre la découpe de la gouttière occlusale sur son modèle.

### Avantages apportés

Un premier but de la présente invention est de résoudre tout ou partie des problèmes techniques liés à l'art antérieur précité.

Un autre but de la présente invention est de proposer un dispositif de coupe assurant une coupe précise de la gouttière occlusale.

Un autre but de la présente invention est de proposer un dispositif de coupe permettant de réaliser la coupe sans risque de contact avec l'outil de coupe et donc sans risque de blessure.

Un autre but de la présente invention est de proposer un dispositif de coupe pouvant être mis en œuvre sans formation particulière.

Un autre but de la présente invention est de proposer un dispositif de coupe de faible encombrement permettant une manutention et un stockage aisé.

### Brève description des dessins

La présente invention sera mieux comprise à la lecture d'un exemple détaillé de réalisation en référence aux figures annexées, fournies à titre d'exemple non limitatif, parmi lesquels :
La figure 1 représente un exemple de réalisation en perspective d'un exemple de réalisation d'un dispositif de coupe conforme à l'invention,
La figure 2 représente en vue en perspective de l'exemple de la figure 1 avec l'outil de coupe en position de découpe,
La figure 3 représente une vue en perspective de la base avec son plateau en position de réception de la gouttière occlusale,
La figure 4 représente une vue en perspective de la base avec son plateau en position ouverte pour la pose de la gouttière occlusale.

### Description des modes de réalisation

La présente invention vise à protéger un dispositif de coupe 1. Ce dispositif de coupe permet la séparation d'une gouttière occlusale d'un modèle d'arcade dentaire sur laquelle la gouttière occlusale a été thermoformée.

En effet lorsque la gouttière est thermoformée sur le modèle d'arcade, la séparation nécessite une coupe sur tout le périmètre de la base du modèle afin de pouvoir dans un second temps, une fois la coupe réalisée, venir séparer la gouttière de son modèle. Une fois la gouttière séparée, il suffira de réaliser des opérations de finition tel qu'un polissage pour pouvoir utiliser la gouttière occlusale.

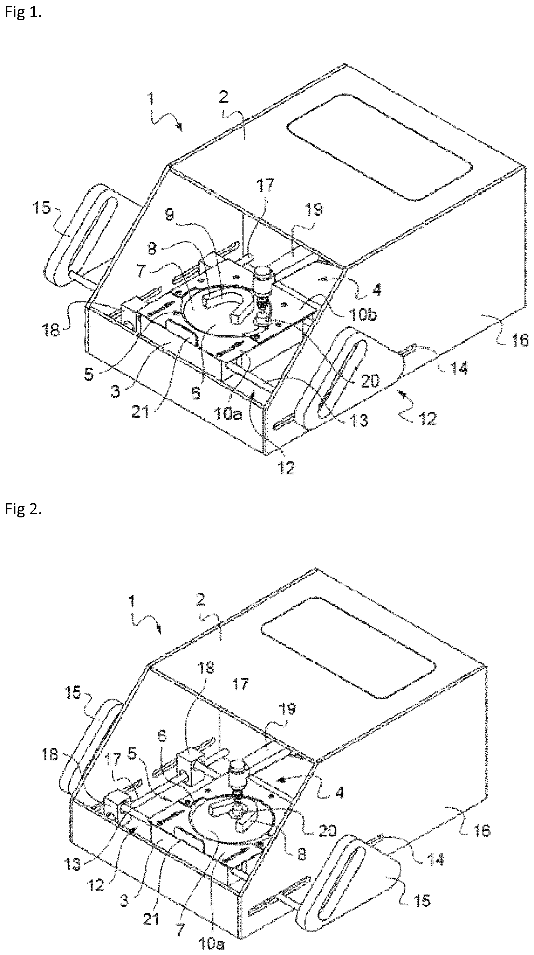

En se reportant principalement aux figures 1 et 2 représentants des vues en perspectives de l'invention, on voit que pour permettre cette séparation le dispositif de coupe 1 comprend un boîtier 2 avec une base 3 et des moyens de coupe 4.

La base 3 comportant des moyens de réception 5, aptes à maintenir, sur un plateau 6, solidaire de la base 3, le film 7 de la gouttière occlusale 8 thermoformée. Une fois positionné, le film 7 est bloqué sur le plateau 6 et la découpe peut être effectuée sans risque de glissement ou de déplacement de l'ensemble formé par la gouttière 8 et le modèle 9. Dans l'exemple de réalisation des figures annexées, le film 7 est sensiblement en forme de disque, toutefois d'autres formes dépendant du dispositif de thermoformage sont également possibles et notamment en forme de quadrilatère.

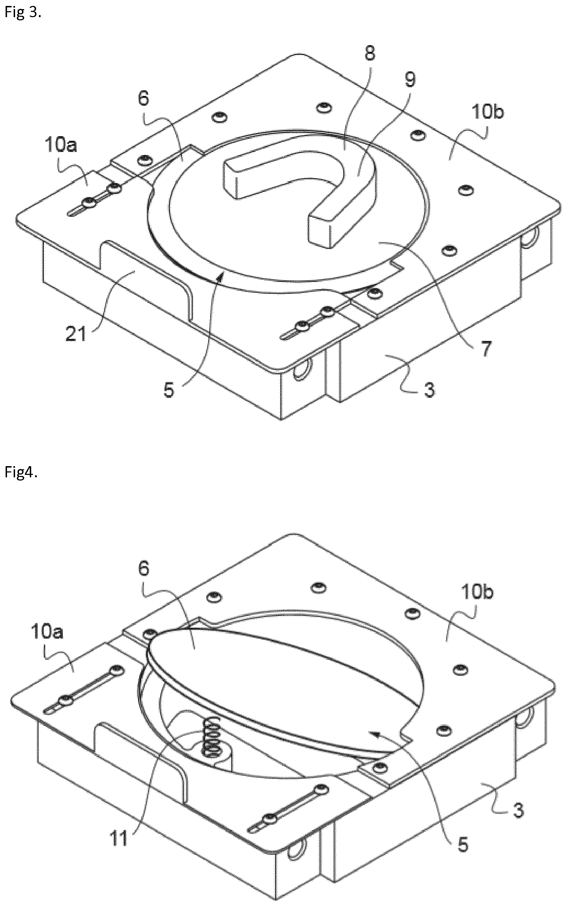

Selon le mode de réalisation avantageux, particulièrement visible aux figures 3 et 4 représentants respectivement la base 3 avec son plateau 6 en position de réception de la gouttière occlusale 8 et la base 3 avec son plateau 6 en position ouverte pour la pose de la gouttière occlusale 8, les moyens de réception 5 comportent deux plaques 10a, 10b assujetties au plateau 6, une des plaques 10a étant mobile en translation par rapport à l'autre.

Le positionnement des plaques 10a et 10b est tel que l'écartement des plaques 10a et 10b permet l'insertion de la gouttière occlusale 8 tandis que le rapprochement des plaques 10a et 10b permet le blocage du film 7 entre le plateau 6 et lesdites plaques 10a et 10b.

Pour faciliter le positionnement de l'ensemble gouttière 8 et modèle 9, le plateau 6 est monté sur ressort 11 et en pivot, le ressort 11 assurant le pivotement du plateau 6 vers le haut lorsque les plaques 10a et 10b sont écartées, permettant de faciliter le positionnement du film 7 de la gouttière occlusale 8.

En se reportant à nouveau aux figures 1 et 2 on voit que le dispositif de coupe 1 comporte en outre des moyens de déplacement 12 du plateau 6 dans un plan sensiblement horizontal.

De manière avantageuse les moyens de déplacement 12 du plateau 6 comportent au moins deux tiges longitudinales 13 supportant la base 3.

Ces tiges longitudinales 13 traversent des glissières 14 prévues sur les flancs 16 du boîtier 2. Pour permettre la manipulation des tiges longitudinales 13, ces dernières sont reliées à leurs extrémités par des poignées 15. Les poignées 15 sont manipulés par l'opérateur permettant le déplacement des tiges 13 le long des glissières et perpendiculairement à elles et par conséquent le déplacement du plateau 6 par rapport aux moyens de coupe 4.

Avantageusement on prévoit en plus des tiges longitudinales 13, des tiges transversales 17 pour faciliter le déplacement de la base 3 et donc du plateau 6.

A cette fin lesdites au moins deux tiges longitudinales 13 coulissent chacune dans un boîtier de connexion 18 supportant une tige transversale 17, la tige longitudinale 13 et la tige transversale 17 permettant respectivement le déplacement perpendiculairement aux glissières et le long de ces dernières.

Le dispositif de coupe 1 comporte, comme indiqué plus haut des moyens de coupe 4. Ces moyens de coupe 4 sont reliés, via un bras 19, à une paroi du boitier 2. Ces moyens de coupe 4 coopèrent avec les moyens de déplacement 12 du plateau 6 pour permettre la découpe de la gouttière occlusale 8 sur son modèle 9.

Comme représenté aux figures 1 et 2 les moyens de coupe 4 comportent une tête de découpe 20 équipée d'un disque de coupe assurant une coupe dans un plan sensiblement parallèle au plan du plateau 6. Toutefois dans d'autres modes de réalisation d'autres dispositifs de coupe connus de l'homme du métier pourront être utilisés et par exemple une découpe de type laser ou une découpe à lame.

Avantageusement les moyens de coupe 4 comportent un limiteur de profondeur de coupe permettant de limiter la coupe dans le modèle 9 à une profondeur de l'ordre de 1 à 3 millimètres.

Selon une variante de réalisation on prévoit que les moyens de coupe 4 comportent des moyens d'ajustement verticaux du positionnement de la tête de découpe 20. A cette fin la tête de découpe 20 est montée sur un rail vertical (non représentée dans les figures annexées). La tête de découpe 20 pouvant être déplacée le long de ce dernier par une molette ou par des moyens de commande motorisés.

Le fonctionnement du dispositif de coupe 4 est très simple et nécessite peu d'apprentissage, dans un premier temps l'opérateur écarte la plaque mobile 10a en tirant sur la patte 21. Cette opération a pour effet de dégager le plateau 6 qui s'incline sous l'effet du ressort 11. L'opérateur peut ainsi placer le film 7 sur le plateau 6, appuyer sur ce dernier pour le placer à l'horizontal et faire revenir la plaque 10a vers sa position initiale en direction de la plaque 10b. Le film 7 est alors verrouillé et la découpe peut débuter. Pour cela l'opérateur agit sur les moyens de déplacement 12 de manière à placer l'ensemble gouttière 8/modèle 9, contre la tête de découpe 20. L'outil de coupe est alors activé et l'opérateur déplace le plateau 6 au moyen des poignées 15 pour effectuer la coupe sur tout le périmètre de la base de la gouttière 8. Eventuellement l'opérateur peut effectuer une étape supplémentaire de déplacement vertical de la tête de découpe pour la positionner au niveau de la base de la gouttière 8.

Pour visualiser la coupe sans risque on prévoit avantageusement que le boîtier 2 comporte une face avant inclinée avec une fenêtre de visualisation des opérations de coupe et un accès au plateau.

De manière avantageuse on prévoit des moyens de détachement entre la glissière 8 découpée et le modèle 9.

Bien entendu, d'autres caractéristiques de l'invention auraient également pu être envisagées sans pour autant sortir du cadre de l'invention définie par les revendications ci-après.

## Revendications

1. Dispositif de coupe, pour la séparation d'une gouttière occlusale (8) d'un modèle d'arcade dentaire (9) sur laquelle la gouttière occlusale a été thermoformée, **caractérisé en ce qu'**il comprend un boîtier (2) avec :
- une base (3) comportant des moyens de réception (5), aptes à maintenir, sur un plateau (6), solidaire de la base (3), le film (7) de la gouttière occlusale (8), et des moyens de déplacement (12) du plateau (6) dans un plan sensiblement horizontal,
- des moyens de coupe reliés (4), via un bras (19), à une paroi du boîtier (2) et coopérant avec les moyens de déplacement (12) du plateau (6) pour permettre la découpe de la gouttière occlusale (8) sur son modèle (9).

2. Dispositif de coupe selon la revendication 1 dans laquelle les moyens de réception (5) comportent deux plaques (10a, 10b), assujetties au plateau, une des plaques (10a) étant mobile en translation par rapport à l'autre, l'écartement des plaques permettant l'insertion de la gouttière occlusale (8), le rapprochement des plaques permettant le blocage du film (7) entre le plateau (6) et lesdites plaques(10a, 10b).

3. Dispositif de coupe selon la revendication 2 dans lequel le plateau (6) est monté sur ressort (11) et en pivot, le ressort (11) assurant le pivotement du plateau (6) vers le haut lorsque les plaques (10a, 10b) sont écartées, permettant de faciliter le positionnement du film (7) de la gouttière occlusale (8).

4. Dispositif de coupe selon l'une quelconque des revendications précédentes dans lequel les moyens de déplacement (12) du plateau comportent au moins deux tiges longitudinales (13) supportant la base (3), lesdites tiges longitudinales (13), traversant des glissières (14) prévues sur les flancs (17) du boîtier, étant reliées à leurs extrémités par des poignées (16) permettant le déplacement des tiges longitudinales (13) le long des glissières et perpendiculairement à elles.

5. Dispositif de coupe selon la revendication 4 dans lequel lesdites au moins deux tiges longitudinales (13) coulissent chacune dans un boîtier de connexion (18) supportant une tige transversale (17), la tige longitudinale (13) et la tige transversale (17) permettant respectivement le déplacement perpendiculairement aux glissières (14) et le long de ces dernières.

6. Dispositif de coupe selon l'une quelconque des revendications précédentes dans lequel les moyens de coupe comportent une tête de découpe (10) équipée d'un disque de coupe assurant une coupe dans un plan sensiblement parallèle au plan du plateau (6).

7. Dispositif de coupe selon la revendication 6 comportant un limiteur de profondeur de coupe permettant de limiter la coupe dans le modèle d'arcade (9).

8. Dispositif de coupe selon la revendication 6 comportant des moyens d'ajustement verticaux du positionnement de la tête de découpe, montée sur un rail vertical et pouvant être déplacée le long de ce dernier par une molette ou par des moyens de commande motorisés.

9. Dispositif de coupe selon l'une quelconque des revendications précédentes dans lequel le boîtier comporte une face avant inclinée avec une fenêtre de visualisation des opérations de coupe et un accès au plateau.

10. Dispositif de coupe selon l'une quelconque des revendications précédentes comportant des moyens de détachement entre la glissière découpée et le modèle.
